# EUROPEAN PATENT SPECIFICATION

(11) **EP 4 329 476 B1**
(45) Date of publication and mention of the grant of the patent: **07.05.2025**
(21) Application number: 23712627.1
(22) Date of filing: 14.03.2023
(51) Int. Cl.: A01G 9/04, A01G 31/04

(54) **CULTIVATION TROUGH AND TRANSPORT SYSTEM**
KULTURRINNE UND TRANSPORTSYSTEM
CANAL DE CULTURE ET SYSTÈME DE TRANSPORT

(30) Priority: 14.03.2022 NL 2031269
(43) Date of publication of application: 06.03.2024
(73) Proprietor: PB Techniek B.V., 2676 LV Maasdijk (NL)
(72) Inventor: BRABANDER, Koenraad Hedricus Maria, 2676 LV Maasdijk (NL)
(74) Representative: Arnold & Siedsma
(86) International application number: PCT/NL2023/050126
(87) International publication number: WO 2023/177288

(56) References cited:
- EP-A1- 1 374 666
- DE-C1- 4 026 105
- NL-A- 8 503 000
- US-A- 4 028 847
- US-A- 4 337 986
- US-A- 4 476 651

## Description

The present disclosure relates to a cultivation trough and a transport system for such a cultivation trough. Moreover, the present disclosure relates to a method comprising usage of at least one such a cultivation trough and/or transport system.

Cultivation troughs - which are sometimes referred to as cultivation gutters or cultivation gullies - are commonly used in horticultural cultivation systems in greenhouses to accommodate and grow crops. In these horticultural cultivation systems seeds, seedlings or young crops are arranged in respective receptacles of adjacently arranged cultivation troughs. Over the duration of a grow cycle of the crops ending when the crops are ready for harvesting, the cultivation troughs are moved step-wise in a transport direction towards an end of the cultivation system. By the time the crops have fully matured and are ready for harvesting, the cultivation trough in which they are placed will have reached the end of a production line of the cultivation system. The cultivation trough is then removed for harvesting of the crops and cleaning of the cultivation trough, after which the cultivation trough is reseeded and placed back into the cultivation system to reiterate the grow cycle.

The publication US 4 476 651 A discloses that plants are supported, positioned and transported in a hydroponic growing system by notched spacer bars riding on wheeled rails and interlocking with external ribs on elongated troughs in which the plants are grown.

The publication DE 40 26 105 C1 discloses that multiple cultivation troughs, each serving to accommodate multiple plant pots, are connected with two carrier beams that are parallel at an offset from each other. To this end, holding latches extend upwards from the top side of the carrier beams and engage with protrusions at the cultivation troughs.

The publication US 4 337 986 A discloses a soilless growth chamber with troughs containing small plants. Tubular screw sections with a helical groove are used to advance the throughs from a loading end to and unloading end of said chamber. A downwardly projecting drive pin engages in the helical groove.

In commercial greenhouses, it is desirable to grow crops as efficiently as possible. In part, this is achieved by optimizing the number of crops grown per unit of surface area of the greenhouse, by creating optimal growth conditions for crops and by ensuring that the used cultivation system performs consistently and reliably to minimize any losses in terms of crops and time or resources spent on growing the crops and maintenance of the cultivation system.

The objective of the present invention is to provide a cultivation trough and transport system that are improved relative to the prior art with respect to one or more of the here above aspects.

This objective is achieved with a cultivation trough according to the present invention, comprising at least one elongate receptacle extending in a longitudinal direction and configured to receive one or more of crops, water and substrate, wherein the cultivation trough is configured to be transportable by a transport system in a transport direction transverse to the longitudinal direction of the cultivation trough and to be supported by an upper surface of at least one flange of the transport system, and wherein the cultivation trough comprises a stabilizer configured to at least partially enclose the at least one flange of the transport system and to engage with a lower surface of the at least one flange defining a tilt support of the transport system to thereby stabilize the cultivation trough to prevent tilting thereof.

The cultivation trough according to the present invention is advantageously protected against tilting and tipping over, which may occur in particular when the cultivation trough is moved by the transport system or accidentally nudged by a person. As such, losses in terms of time and resource spent rearranging the cultivation trough or damaged crops resulting from this tilting are effectively prevented. In this respect it is remarked that the risk of tipping over increases considerably when the plants grow towards the end of the production line. After all, bigger plants are heavier and they also shift the center-of-gravity of the cultivation trough with plants upwards. A higher center-of-gravity decreases the stability.

In a preferred embodiment of the cultivation trough according to the present invention, the stabilizer comprises one or more than one hook configured to extend along the tilt support of the transport system.

In a further preferred embodiment of the cultivation trough according to the present invention, the one or more than one hook is configured to extend in the longitudinal direction of the cultivation trough.

In a further preferred embodiment of the cultivation trough according to the present invention, the stabilizer is configured to at least partially enclose the tilt support of the transport system.

In a further preferred embodiment of the cultivation trough according to the present invention, the stabilizer comprises a recess configured to receive the tilt support of the transport system.

In a further preferred embodiment of the cultivation trough according to the present invention, the recess is disposed in at least one wall of the cultivation trough.

In a further preferred embodiment of the cultivation trough according to the present invention, the recess is arranged in one or more than one or more than one side wall of the cultivation trough, and a bottom wall of the cultivation trough.

In a further preferred embodiment of the cultivation trough according to the present invention, the stabilizer is arranged at a vertical offset relative to the tilt support of the transport system in at least a non-tilted state of the cultivation trough.

In a further preferred embodiment of the cultivation trough according to the present invention, the cultivation trough further comprises a plurality of stabilizers disposed substantially along a length of the cultivation trough.

In a further preferred embodiment of the cultivation trough according to the present invention, the cultivation trough further comprises a crop accommodation that is arranged asymmetrical relative to a cross section of the cultivation trough. The cross section is transverse relative to the longitudinal direction of the cultivation trough. Consequently, the crop accommodation is arranged at a greater distance from a first longitudinal side wall of the cultivation trough than the distance to a second longitudinal side wall of the cultivation trough, wherein the first and second longitudinal side walls are arranged on opposite sides of the cultivation trough, as well as on opposite sides relative to the crop accommodation. In this way, an enlarged space is provided between the first longitudinal side wall of the cultivation trough and the crop accommodation. This enlarged space allows for more reliable watering of the plants inside the cultivation trough, or a water reservoir defined by this enlarged space inside the cultivation trough. As roots of plants grow naturally towards a water source, having a sole or major water source inside the cultivation trough on one longitudinal side wall of the cultivation trough will cause the root growth to consistently extend into that area, resulting in an asymmetrical weight distribution relative to the cross section of the cultivation through. Most conventional cultivation troughs normally have a substantially symmetrical design in cross section, because an asymmetrical weight distribution may more easily result in a sideward tipping over of the cultivation troughs. The risk of tipping over increases considerably towards the end of the production line of the cultivation system, because the plants grow and thereby become heavier on the one hand, while also shifting the center-of-gravity of the cultivation trough with plants upwards on the other hand. Moreover, due to plant growth, a horizontal offset in the transport direction may be provided or increased between adjacent cultivation troughs to provide physical space of the plants. As a result, neighboring cultivation troughs may not obtain any sideward support from each other anymore. It is however by virtue of the stabilizer that the cultivation troughs according to the present invention are able to apply an advantageous asymmetrical positioning of the crop accommodation relative to the cross section of the cultivation troughs, while at the same time preventing the cultivation troughs against tipping over.

Moreover, because of the increased stability of the cultivation troughs provided by the present invention the width dimensions of the cultivation troughs may be smaller than those of prior-art cultivation throughs without diminishing the stability of the cultivation troughs.

The hereabove objective is further achieved with a transport system according to the present invention, the transport system being configured to transport a plurality of cultivation troughs in a transport direction transverse to longitudinal directions of the cultivation troughs, wherein the transport system comprises at least one flange configured to extend along the stabilizer of the cultivation trough and engage with one or more of respective stabilizers of each of the plurality of cultivation troughs, to thereby stabilize the cultivation troughs to prevent tilting thereof, wherein an upper surface of the at least one flange defines a support configured to support the cultivation trough and a lower surface of the at least one flange defines a tilt support configured to prevent the cultivation trough against tilting.

**In** a further preferred embodiment of the transport system according to the present invention, the at least one flange substantially extends along the transport system in the transport direction.

In a further preferred embodiment of the transport system according to the present invention, the transport system further comprises at least one actuator configured to engage and move each of the plurality of cultivation troughs in the transport direction, wherein the at least one tilt support is arranged adjacent to the at least one actuator.

In a further preferred embodiment of the transport system according to the present invention, the transport system further comprises a plurality of tilt supports disposed substantially along a width direction of the transport system transverse to the transport direction.

The hereabove objective is further achieved by a cultivation system comprising at least one transport system as disclosed herein in combination with, in particular supporting, at least one cultivation through as disclosed herein.

Lastly, the hereabove objective is further achieved with a method for cultivating a crop comprising usage of at least one of the cultivation trough, the transport system and the cultivation system according to the present disclosure.

The present invention will be elucidated further here below with reference to the drawing, in which:
Figure 1 depicts a schematic top-down view of a cultivation system having a transport system with rows of cultivation troughs;
Figure 2 shows a side view of a row or plurality of cultivation troughs from the cultivation system of Figure 1;
Figure 3 shows a cross-section of a cultivation trough according to the present invention;
Figure 4 shows a view of a cultivation trough placed on the transport system when viewed in a direction opposite the transport direction;
Figures 5 and 6 depict a section of Figure 4 in more detail in, respectively, a frontal view and a perspective view; and
Figures 7A to 7D illustrate a process of engaging and transporting the cultivation trough by means of the transport system.

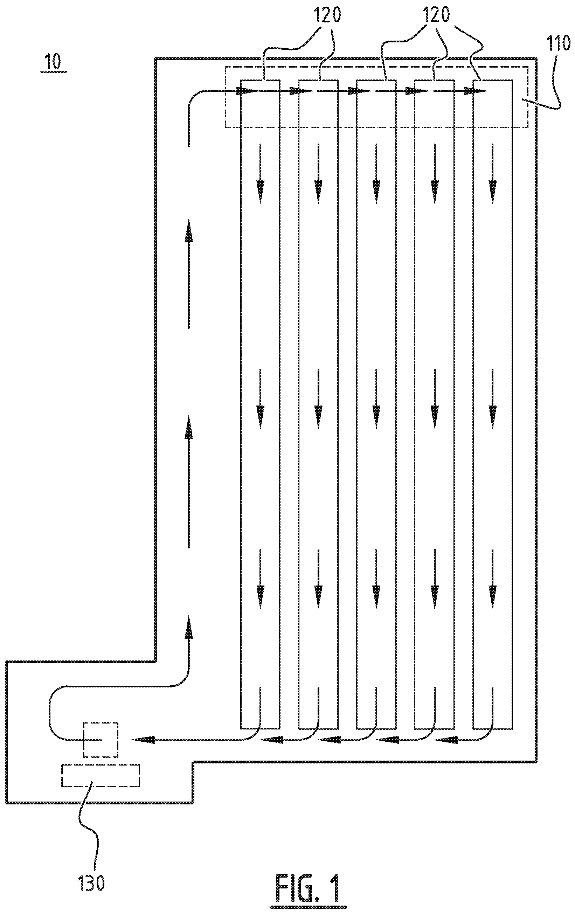

Figure 1 shows a top-down view of a cultivation system 10 including a transport system 100 placed in a greenhouse. The cultivation system 10 is a rotation cultivation system in that crops are continuously removed therefrom for harvesting and seeds, seedlings or young crops are introduced therein to start their grow cycle.

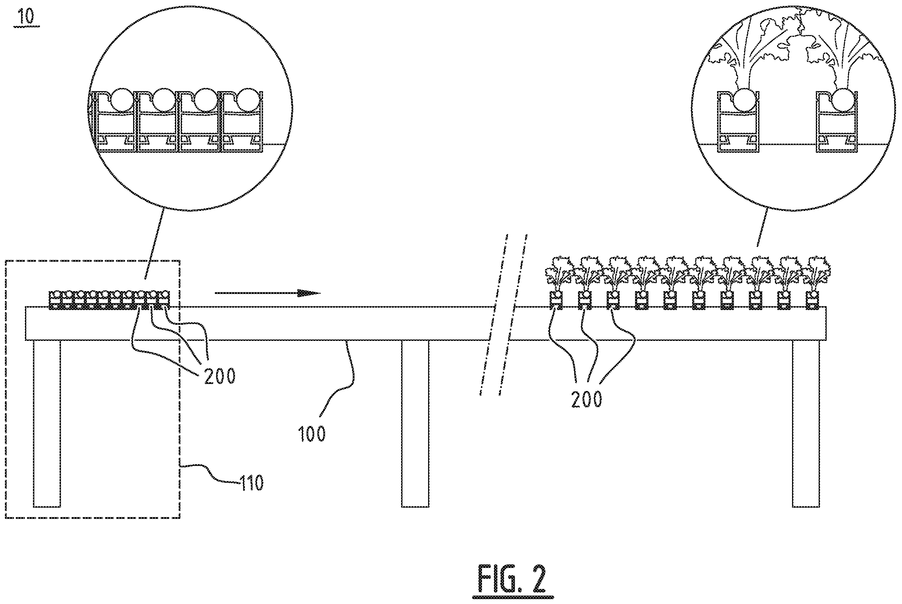

As can be discerned from Figure 1 in conjunction with Figure 2, the cultivation system 10 comprises a plurality of rows 120 of cultivation troughs 200, wherein each cultivation trough 200 comprises crops or plants to be cultivated. The cultivation troughs 200 are disposed parallel to one another with respect to the longitudinal direction to form each row 120. In Figure 1 five rows 120 of cultivation troughs 200 are depicted, although the present disclosure is not limited thereto and any arbitrary number of rows 120 may be selected.

The cultivation system 10 comprises a germination section 110 at the start of each row 120. In this germination section 110, cultivation troughs 200 with crops at the start of their grow cycle are introduced into the cultivation system 10. At this stage of the grow cycle, the cultivation troughs 200 are arranged in close proximity to one another to optimize usage of the available surface area and - in prior-art cultivation systems - provide stability to one another to prevent the cultivation troughs 200 from tilting and/or tipping over.

Over the course of the grow cycle of the crops, the cultivation troughs 200 are transported from the germination section 110 in a transport direction indicated by the downward arrows in Figure 2. Because the crops grow in size over the course of the grow cycle, an intermediate distance between subsequent cultivation troughs 200 must be increased over the course of the grow cycle to provide sufficient growth space for each crop. In Figure 2, this is indicated by the cultivation troughs 200 being disposed closer to one another at the germination section 110 on the left side of Figure 2 than at an end section on the right side of Figure 2.

When the crops have completed their grow cycle and are ready for harvesting at the end of the production line of the cultivation system 10, the cultivation troughs 200 are removed from their respective rows 120 at an end section opposite the germination section 110 of the rows 120. The cultivation troughs 200 are then brought to a harvesting section 130 where the crops are harvested and the cultivation troughs 200 are emptied and cleaned. Finally, the cultivation troughs 200 are reseeded and reintroduced into the germination section 110 of cultivation system 10 to start another grow cycle.

Figure 2 shows a cross-section of the cultivation trough 200 of Figure 2. The cultivation trough 200 comprises at least one elongate receptacle 219 extending in a longitudinal direction of the cultivation trough 200. The elongate receptacle 219 is configured to receive one or more of crops, water and optionally substrate if a substrate-based cultivation method is used.

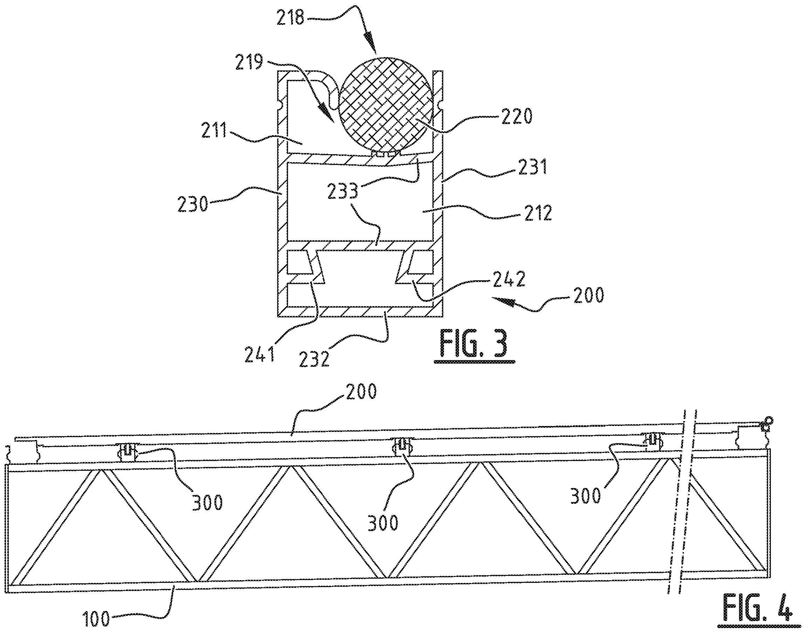

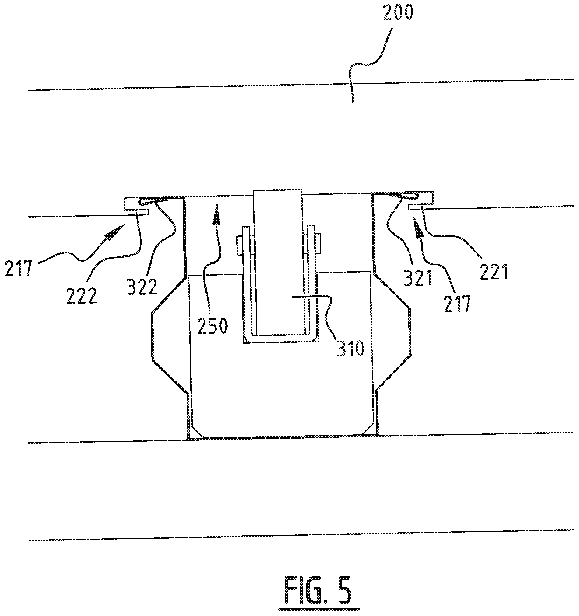

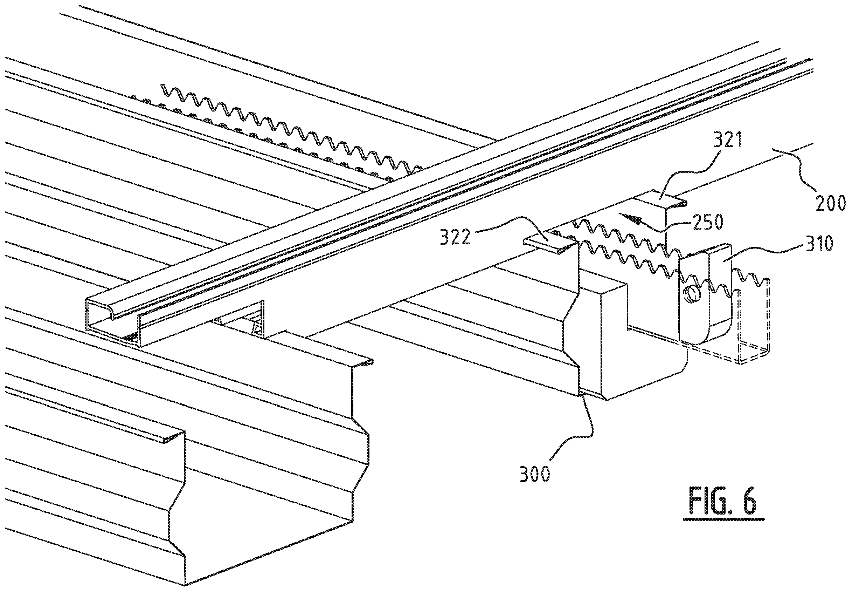

The cultivation trough 200 shown in Figure 3 comprises a first longitudinal side wall 230 and a second longitudinal side wall 231 that are connected to each other via a bottom wall 232 and one or more than one intermediate wall 233 that increase the stiffness to the cultivation trough 200. The intermediate wall 233, and more in particular an upper intermediate wall 233 in case of more than one intermediate wall 233, may support a substrate 220 for growth of the crop. Parts of the first longitudinal side wall 230 and the second longitudinal side wall 231 extend upward relative to the (upper) intermediate wall 233 and mutually define a receptacle 219. This receptacle 219 defines a crop accommodation 218 that is arranged asymmetrical relative to the cross section of the cultivation trough 200. In Figure 3, the crop accommodation 218 that comprises the substrate 220 is arranged at a greater distance from the first longitudinal side wall 230 than the distance to the second longitudinal side wall 231. As a result, a root and watering area 211 is formed between the substrate 220 and the first longitudinal side wall 230, allowing for a reliable watering of the roots of the crops that will naturally grow towards and into this root and watering area 211. The asymmetrical positioning of the crop accommodation 218 and substrate 220, the root and watering area 211 may be large relative to the total width defined between the first longitudinal side wall 230 and the second longitudinal side wall 231 of the cultivation trough 200. This allows for sufficient space for introducing water into the root and watering area 211, while also allowing the total width of the cultivation trough 200 to be relatively small. The width of the cultivation trough 200 determines how many cultivation troughs 200 may be accommodated in the cultivation system 10. The cultivation trough 200 moreover comprises first and second protrusions 241 and 242, which are arranged on the first longitudinal side wall 230 and the second longitudinal side wall 231, respectively. These protrusions 241, 242 are configured to be engaged by a member 310 of an actuator 300 of the transport system 100 to move the cultivation trough 200 in the transport direction as described hereabove. The member 310 of the transport system 100 may reach the first and second protrusions 241, 242 via a recess 250 that is not shown in the cross section of the cultivation trough 200 depicted in Figure 3, but will be elucidated here below with reference to Figure 5 and Figure 6.

Figure 4 shows a cultivation trough 200 in conjunction with the transport system 100. As can be discerned from this figure, the transport system 100 comprises one or more actuators 300 configured to engage and move each of the plurality of cultivation troughs 200 in the transport direction. The actuators 300 are disposed at locations that respectively correspond to the locations of stabilizers 217 of the cultivation trough 200.

In Figure 5 a detailed view of one of the actuators 300 of Figure 4 engaging a cultivation trough 200 is depicted. As can be discerned from Figure 5, the cultivation trough 200 comprises a stabilizer 217 in the form of a recess 250 where the side wall 231 and the bottom wall 232 have been partially removed to define a first hook 221 and a second hook 222.

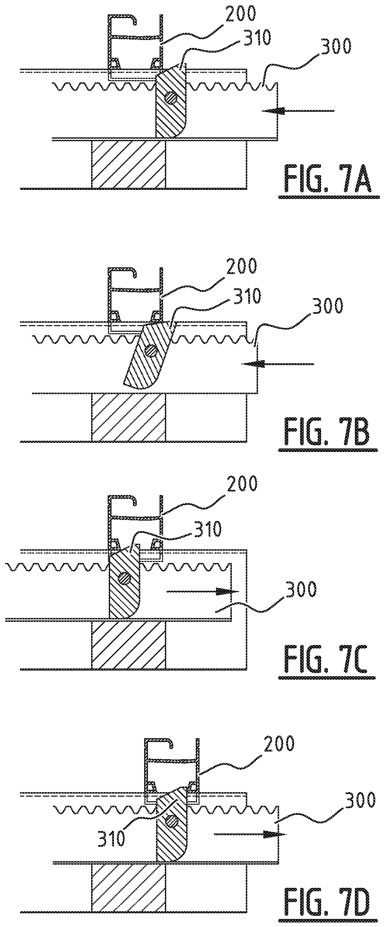

The actuator 300 comprises a pivotable member 310 configured to extend into the recess 250 and abut the first and/or second protrusions 241, 242, to thereby move the cultivation trough 200 in the transport direction. The interaction between the pivotable member 310 and the first and second protrusions 241, 242 during transport of the cultivation trough 200 will be further elucidated here below with reference to Figures 7A to 7D.

The recess 250 extends over a longer distance in the side wall 231 than in the bottom wall 232, to thereby define a first hook 221 and a second hook 222. More in particular, the first hook 221 and a second hook 222 may constitute hooks configured to extend along respective tilt supports 321, 322 of the transport system 100, preferably in at least the longitudinal direction of the cultivation trough 200 that is transverse to the transportation direction.

Still referring to Figure 5 and moreover Figure 6, the transport system 100 comprises a first tilt support 321 and a second tilt support 322 configured to engage with the first hook 221 and the second hook 222 of the cultivation trough 200, respectively. In particular, the tilt support 321 and a second tilt support 322 may each constitute a flange configured to extend along the stabilizer 217 of the cultivation trough 200, and to be at least partially enclosed thereby.

Within the context of the present invention as disclosed herein, the stabilizer 217 of the cultivation trough 200 may refer to any one or more of the recess 250, the first hook 221 and the second hook 222.

Each of the flanges constituting the first tilt support 321 and the second tilt support 322 comprises an upper surface and a lower surface. The respective upper surfaces of the first and second tilt supports 321, 322 are configured to support the cultivation trough 200 when the cultivation trough 200 is arranged upon and/or transported by the transport system 100. When the cultivation trough 200 is inclined to tilt - which may occur in particular during transport or when the cultivation trough is nudged - the respective lower surfaces of the flanges constituting the first tilt support 321 and the second tilt support 322 respectively contact the first hook 221 and the second hook 222, thereby preventing the cultivation trough 200 from tilting.

With the cultivation trough 200 and the transport system 100 according to the present invention, an accidental tilting of the cultivation trough 200 is effectively prevented over the entire duration of the grow cycle of the crops. The costs associated with a cultivation trough 200 tilting - which may include having to rearrange the cultivation trough 200 or even having to replace its contents - is thereby likewise avoided.

In prior-art cultivation troughs, the width of the cultivation trough has to be sufficiently large to provide a sufficiently large footprint to thereby stabilize the cultivation trough. With the increased stability provided by the cultivation trough 200 and transport system 100 according to the present invention, this is no longer required and the width of the cultivation trough 200 may be further reduced. As such, the available surface area for cultivating crops may be utilized more efficiently with a greater number of cultivation troughs 200 being placed thereon.

Furthermore, the increased degree of stability of the cultivation trough 200 and the transport system 100 according to the present invention allows for further modifications of the design of the cultivation trough 200 that are not attainable with prior-art cultivation troughs because they would result in the cultivation trough being unstable. In Figure 3, a substrate 220 that is arranged in the crop accommodation 218 of the elongate receptacle 219 is offset relative to the (dotted) center line of the cultivation trough 200 (Figure 3); with the root and watering area 211 accommodating the roots of the crops being positioned asymmetrical, i.e. closer to the second longitudinal side wall 231 than to the first longitudinal side wall 230. Typically, water is supplied to the root and watering area 211 at only one side thereof. Here, the crop will primarily develop water roots with which the crop absorbs water. At a side where no water is supplied, the crop will generally not develop roots. Instead, the crop may primarily develop air roots at this side with which it may absorb air.

A process of transporting a cultivation trough 200 by means of the transport system 100 will now be described with reference to Figure 7A to Figure 7D.

In Figure 7A, an actuator 300 of the transport system 100 having arranged thereon a pivotable member 310 is displaced in the direction of the arrow towards a cultivation trough 200 to be transported. The pivotable member 310 comprises a chamfered top and pivots to slide past the second longitudinal side wall 231 upon contact with the cultivation trough 200 as is illustrated in Figure 7B.

In Figure 7C, the pivotable member 310 has slid past the second longitudinal side wall 231 and pivoted back into its resting position to protrude into the recess 250 of the cultivation trough 200. The pivotable member 310 may connected with a spring (not shown) or comprise a weighted lower section for this purpose. Upon reassuming its resting position, the pivotable member 310 is retracted in the direction of the arrow in Figure 7C.

In Figure 7D, the pivotable member 310 contacts the first or second protrusion 241, 242 as it is retracted in the direction of the arrow (i.e. the transport direction). Because the pivotable member 310 is configured to be not rotatable in the counter-clockwise direction relative to its resting position, the pivotable member 310 catches the cultivation trough 200 and displaces it in the transport direction until it reaches a desired location.

The cultivation trough 200 according to the present invention may, for example, be manufactured by extruding a material including any suitable type of plastic or metal. The stabilizer 217 including any one of the recess 250, the first hook 221 and the second hook 222, and combinations thereof, may be manufactured by local milling of any excess material.

Moreover, it is conceivable that the first hook 221 and the second hook 222 are alternatively embodied by separate members distinct from a main body of the cultivation trough 200, that are attached to the main body of the cultivation trough 200 during a manufacturing process.

## Claims

1. Cultivation trough (200) comprising at least one elongate receptacle (219) extending in a longitudinal direction and configured to receive one or more of crops, water and substrate;
wherein the cultivation trough (200) is configured to be transportable by a transport system (100) in a transport direction transverse to the longitudinal direction of the cultivation trough (200) and to be supported by an upper surface of at least one flange of the transport system (100), and
wherein the cultivation trough (200) comprises a stabilizer (217) configured to at least partially enclose the at least one flange of the transport system (100) and to engage with a lower surface of the at least one flange defining a tilt support (321, 322) of the transport system (100) to thereby stabilize the cultivation trough (200) to prevent tilting thereof.

2. Cultivation trough (200) according to claim 1, wherein the stabilizer (217) comprises one or more than one hook (221, 222) configured to extend along the tilt support (321, 322) of the transport system (100), wherein preferably the one or more than one hook (221, 222) is configured to extend in the longitudinal direction of the cultivation trough (200).

3. Cultivation trough (200) according to any one of the foregoing claims, wherein the stabilizer (217) comprises a recess (250) configured to receive the tilt support (321, 322) of the transport system (100).

4. Cultivation trough (200) according to claim 3, wherein the recess (250) is disposed in at least one wall of the cultivation trough (200).

5. Cultivation trough (200) according to claim 4, wherein the recess (250) is arranged in one or more than one side wall of the cultivation trough (200).

6. Cultivation trough (200) according to claim 4 or 5, wherein the recess (250) is arranged in a bottom wall of the cultivation trough (200).

7. Cultivation trough (200) according to any one of the foregoing claims, wherein the stabilizer (217) is arranged at a vertical offset relative to the tilt support (321, 322) of the transport system (100) in at least a non-tilted state of the cultivation trough (200).

8. Cultivation trough (200) according to any one of the foregoing claims, comprising a plurality of stabilizers (217) disposed substantially along a length of the cultivation trough (200).

9. Cultivation trough (200) according to any one of the foregoing claims, further comprising a crop accommodation (218) that is arranged asymmetrical relative to a cross section of the cultivation trough (200).

10. Transport system (100) configured to transport a plurality of cultivation troughs (200) in a transport direction transverse to longitudinal directions of the cultivation troughs (200),
wherein the transport system (100) comprises at least one flange configured to extend along and engage with one or more of respective stabilizers (217) of each of the plurality of cultivation troughs (200), to thereby stabilize the cultivation troughs (200) to prevent tilting thereof,
wherein:
- an upper surface of the at least one flange defines a support configured to support the cultivation trough (200); and
- a lower surface of the at least one flange defines a tilt support (321, 322) configured to prevent the cultivation trough (200) against tilting.

11. Transport system (100) according to claim 10, wherein the at least one flange substantially extends along the transport system (100) in the transport direction.

12. Transport system (100) according to claim 10 or 11, further comprising at least one actuator (300) configured to engage and move each of the plurality of cultivation troughs (200) in the transport direction,
wherein the at least one tilt support (321, 322) is arranged adjacent to the at least one actuator (300).

13. Transport system (100) according to any one of the claims 10 - 12, further comprising a plurality of tilt supports (321, 322) disposed substantially along a width direction of the transport system (100) transverse to the transport direction.

14. Cultivation system (10) comprising at least one transport system (100) according to any one of the claims 10 - 13 and at least one cultivation trough (200) according to any of one the claims 1 - 9 supported by the at least one transport system (100).

15. Method for cultivating a crop, the method comprising usage of:
- a cultivation trough (200) according to any one of the claims 1 - 9; and/or
- a transport system (100) according to any one of the claims 10 - 13; or
- a cultivation system (10) according to claim 14.

## Patentansprüche

1. Anbautrog (200), umfassend mindestens einen länglichen Aufnahmebehälter (219), der sich in Längsrichtung erstreckt und konfiguriert ist, um eines oder mehrere von Anbaukulturen, Wasser und Substrat aufzunehmen;
wobei der Anbautrog (200) konfiguriert ist, um durch ein Transportsystem (100) in einer Transportrichtung quer zu der Längsrichtung des Anbautrogs (200) transportierbar zu sein, und um durch eine obere Oberfläche von mindestens einem Flansch des Transportsystems (100) gestützt zu werden, und
wobei der Anbautrog (200) einen Stabilisator (217) umfasst, der konfiguriert ist, um den mindestens einen Flansch des Transportsystems (100) mindestens teilweise zu umschließen, und um mit einer unteren Oberfläche des mindestens einen Flansches in Eingriff zu kommen, der eine Kippstütze (321, 322) des Transportsystems (100) definiert, um dadurch den Anbautrog (200) zu stabilisieren, um ein Kippen desselben zu verhindern.

2. Anbautrog (200) nach Anspruch 1, wobei der Stabilisator (217) einen oder mehr als einen Haken (221, 222) umfasst, die konfiguriert sind, um sich entlang der Kippstütze (321, 322) des Transportsystems (100) zu erstrecken, wobei vorzugsweise der eine oder der mehr als eine Haken (221, 222) konfiguriert sind, um sich in Längsrichtung des Anbautrogs (200) zu erstrecken.

3. Anbautrog (200) nach einem der vorstehenden Ansprüche, wobei der Stabilisator (217) eine Aussparung (250) aufweist, die konfiguriert ist, um die Kippstütze (321, 322) des Transportsystems (100) aufzunehmen.

4. Anbautrog (200) nach Anspruch 3, wobei die Aussparung (250) in mindestens einer Wand des Anbautrogs (200) angeordnet ist.

5. Anbautrog (200) nach Anspruch 4, wobei die Aussparung (250) in einer oder mehr als einer Seitenwand des Anbautrogs (200) angeordnet ist.

6. Anbautrog (200) nach Anspruch 4 oder 5, wobei die Aussparung (250) in einer Bodenwand des Anbautrogs (200) angeordnet ist.

7. Anbautrog (200) nach einem der vorstehenden Ansprüche, wobei der Stabilisator (217) mit einem vertikalen Versatz relativ zu der Kippstütze (321, 322) des Transportsystems (100) in mindestens einem nicht gekippten Zustand des Anbautrogs (200) angeordnet ist.

8. Anbautrog (200) nach einem der vorstehenden Ansprüche, umfassend eine Vielzahl von Stabilisatoren (217), die im Wesentlichen entlang einer Länge des Anbautrogs (200) angeordnet sind.

9. Anbautrog (200) nach einem der vorstehenden Ansprüche, ferner umfassend eine Unterbringung (218) für Anbaukulturen, die relativ zu einem Querschnitt des Anbautrogs (200) asymmetrisch angeordnet ist.

10. Transportsystem (100), das konfiguriert ist, um eine Vielzahl von Anbautrögen (200) in einer Transportrichtung quer zu Längsrichtungen der Anbautröge (200) zu transportieren,
wobei das Transportsystem (100) mindestens einen Flansch umfasst, der konfiguriert ist, um sich entlang eines oder mehrerer der jeweiligen Stabilisatoren (217) von jedem der Vielzahl von Anbautrögen (200) zu erstrecken und mit diesen in Eingriff zu kommen, um dadurch die Anbautröge (200) zu stabilisieren, um ein Kippen derselben zu verhindern,
wobei:
- eine obere Oberfläche des mindestens einen Flansches eine Stütze definiert, die konfiguriert ist, um den Anbautrog (200) zu stützen; und
- eine untere Oberfläche des mindestens einen Flansches eine Kippstütze (321, 322) definiert, die konfiguriert ist, um ein Kippen des Anbautrogs (200) zu verhindern.

11. Transportsystem (100) nach Anspruch 10, wobei sich der mindestens eine Flansch im Wesentlichen entlang des Transportsystems (100) in Transportrichtung erstreckt.

12. Transportsystem (100) nach Anspruch 10 oder 11, ferner umfassend mindestens einen Aktuator (300), der konfiguriert ist, um jeden der Vielzahl von Anbautrögen (200) in Transportrichtung in Eingriff zu nehmen und zu bewegen,
wobei die mindestens eine Kippstütze (321, 322) benachbart zu dem mindestens einen Aktuator (300) angeordnet ist.

13. Transportsystem (100) nach einem der Ansprüche 10 bis 12, ferner umfassend eine Vielzahl von Kippstützen (321, 322), die im Wesentlichen entlang einer Breitenrichtung des Transportsystems (100) quer zu der Transportrichtung eingerichtet sind.

14. Anbausystem (10), umfassend mindestens ein Transportsystem (100) nach einem der Ansprüche 10 bis 13 und mindestens einen Anbautrog (200) nach einem der Ansprüche 1 bis 9, der durch das mindestens eine Transportsystem (100) gestützt wird.

15. Verfahren zum Anbauen einer Anbaukultur, das Verfahren umfassend die Verwendung von:
- einem Anbautrog (200) nach einem der Ansprüche 1 bis 9; und/oder
einem Transportsystem (100) nach einem der Ansprüche 10 bis 13; oder
- einem Anbausystem (10) nach Anspruch 14,

## Revendications

1. Bac de culture (200) comprenant au moins un réceptacle allongé (219) s'étendant dans une direction longitudinale et conçu pour recevoir un ou plusieurs parmi des plantes, de l'eau et un substrat ;
dans lequel le bac de culture (200) est conçu pour être transportable par un système de transport (100) dans une direction de transport transversale à la direction longitudinale du bac de culture (200) et pour être supporté par une surface supérieure d'au moins un rebord du système de transport (100), et
dans lequel le bac de culture (200) comprend un stabilisateur (217) conçu pour entourer au moins partiellement l'au moins un rebord du système de transport (100) et pour venir en prise avec une surface inférieure de l'au moins un rebord en définissant un support de basculement (321, 322) du système de transport (100) pour stabiliser de ce fait le bac de culture (200) pour empêcher un basculement de celui-ci.

2. Bac de culture (200) selon la revendication 1, dans lequel le stabilisateur (217) comprend un ou plusieurs crochets (221, 222) conçus pour s'étendre le long du support de basculement (321, 322) du système de transport (100), dans lequel de préférence le ou les crochets (221, 222) sont conçus pour s'étendre dans la direction longitudinale du bac de culture (200).

3. Bac de culture (200) selon l'une quelconque des revendications qui précèdent, dans lequel le stabilisateur (217) comprend un évidement (250) conçu pour recevoir le support de basculement (321, 322) du système de transport (100).

4. Bac de culture (200) selon la revendication 3, dans lequel l'évidement (250) est disposé dans au moins une paroi du bac de culture (200).

5. Bac de culture (200) selon la revendication 4, dans lequel l'évidement (250) est agencé dans une ou plusieurs parois latérales du bac de culture (200).

6. Bac de culture (200) selon la revendication 4 ou 5, dans lequel l'évidement (250) est agencé dans une paroi inférieure du bac de culture (200).

7. Bac de culture (200) selon l'une quelconque des revendications qui précèdent, dans lequel le stabilisateur (217) est agencé avec un décalage vertical par rapport au support de basculement (321, 322) du système de transport (100) dans au moins un état non basculé du bac de culture (200).

8. Bac de culture (200) selon l'une quelconque des revendications qui précèdent, comprenant une pluralité de stabilisateurs (217) disposés sensiblement le long d'une longueur du bac de culture (200).

9. Bac de culture (200) selon l'une quelconque des revendications qui précèdent, comprenant en outre un compartiment pour plantes (218) qui est agencé asymétriquement par rapport à une section transversale du bac de culture (200).

10. Système de transport (100) conçu pour transporter une pluralité de bacs de culture (200) dans une direction de transport transversale à des directions longitudinales des bacs de culture (200),
dans lequel le système de transport (100) comprend au moins un rebord conçu pour s'étendre le long de, et venir en prise avec, un ou plusieurs des stabilisateurs (217) respectifs de chacun parmi la pluralité de bacs de culture (200), pour stabiliser de ce fait les bacs de culture (200) pour empêcher un basculement de ceux-ci,
dans lequel :
- une surface supérieure de l'au moins un rebord définit un support conçu pour supporter le bac de culture (200) ; et
- une surface inférieure de l'au moins un rebord définit un support de basculement (321, 322) conçu pour empêcher le bac de culture (200) de basculer.

11. Système de transport (100) selon la revendication 10, dans lequel l'au moins un rebord s'étend sensiblement le long du système de transport (100) dans la direction de transport.

12. Système de transport (100) selon la revendication 10 ou 11, comprenant en outre au moins un actionneur (300) conçu pour venir en prise avec, et déplacer, chacun parmi la pluralité de bacs de culture (200) dans la direction de transport,
dans lequel l'au moins un support de basculement (321, 322) est agencé adjacent à l'au moins un actionneur (300).

13. Système de transport (100) selon l'une quelconque des revendications 10 à 12, comprenant en outre une pluralité de supports de basculement (321, 322) disposés sensiblement le long d'une direction en largeur du système de transport (100) transversalement à la direction de transport.

14. Système de culture (10) comprenant au moins un système de transport (100) selon l'une quelconque des revendications 10 à 13 et au moins un bac de culture (200) selon l'une quelconque des revendications 1 à 9 supporté par l'au moins un système de transport (100).

15. Procédé permettant de cultiver une plante, le procédé comprenant l'utilisation de :
- un bac de culture (200) selon l'une quelconque des revendications 1 à 9 ; et/ou
- un système de transport (100) selon l'une quelconque des revendications 10 à 13 ; ou
- un système de culture (10) selon la revendication 14.
